(19) Europäisches Patentamt
European Patent Office
Office européen des brevets

(11) EP 0 680 997 B1

(12) EUROPÄISCHE PATENTSCHRIFT

(45) Veröffentlichungstag und Bekanntmachung des Hinweises auf die Patenterteilung:
**30.09.1998 Patentblatt 1998/40**

(51) Int Cl.6: **C08K 5/54**, C08L 21/00

(21) Anmeldenummer: **95106003.7**

(22) Anmeldetag: **21.04.1995**

(54) **Schwefelhaltige Organosiliciumverbindungen enthaltende Kautschukmischungen**

Rubber compositions containing sulfur-bearing organosilicon compounds

Compositions de caoutchouc contenant des composés organosiliciques contenant du soufre

(84) Benannte Vertragsstaaten:
**BE DE FR GB IT**

(30) Priorität: **04.05.1994 DE 4415658**

(43) Veröffentlichungstag der Anmeldung:
**08.11.1995 Patentblatt 1995/45**

(73) Patentinhaber: **BAYER AG**
**51368 Leverkusen (DE)**

(72) Erfinder:
- **Scholl, Thomas, Dr.**
**D-51469 Bergisch Gladbach (DE)**
- **Weidenhaupt, Hermann-Josef, Dr.**
**D-52388 Nörvenich (DE)**

(56) Entgegenhaltungen:
- **RUBBER CHEMISTRY AND TECHNOLOGY., Bd.57, 1984, AKRON US Seiten 675 - 685 P.VONDRACEK ET AL. 'The effect of the structure of sulfur-containing silane coupling agents on their activity in silica-filled SBR'**

EP 0 680 997 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft schwefelhaltige Organosiliciumverbindungen enthaltende Kautschukmischungen gemäß Anspruch 1 sowie die Verwendung dieser Kautschukmischungen zur Herstellung von Kautschukvulkanisat. Die erfindungsgemäßen Kautschukvulkanisate eignen sich zur Herstellung von Formkörpern, insbesondere zur Herstellung von Reifen, die einen geringen Rollwiderstand aufweisen, verbunden mit einem guten Naßrutschverhalten und einer hohen Abriebsfestigkeit.

Schwefel enthaltende Organosiliciumverbindungen, die als Verstärkungsadditive im Reifenbau eingesetzt werden können, sind bekannt. So werden in DE-OS 2 141 159, 2 141 160 und 2 255 577 bestimmte Organosilane als Verstärkungsadditive insbesondere für kieselsäurehaltige Kautschukvulkanisate beschrieben. Die in den Beispielen beschriebenen Strukturen leiten sich von Trialkoxysilylpropyl-polysulfid ab. Die im Text geeignet genannten Vertreter beginnen mit Alkylbrücken Alk = $-CH_2CH_2-$. Methylen-Brücken sind dagegen nicht erwähnt. Auch die DE-OS 2 035 778 beschreibt Verstärkungsadditive auf Organosilanbasis. Wie schon in den genannten Patentanmeldungen leiten sich alle Beispiele von Trialkoxysilylpropyl-Ausgangsverbindungen ab. Die Alkylbrücke soll hier mindestens die Größe von $-CH_2CH_2CH_2-$ besitzen. Nachteilig an diesen Verbindungen ist, daß die Hystereseverluste nicht nur bei hohen Temperaturen (ca. 60°C), sondern auch bei tiefen Temperaturen (0°C) gesenkt werden. Es ist jedoch bekannt, daß geringe Hysterese bei tiefen Temperaturen (0 bis 20°C) mit einem schlechten Naßrutschverhalten bei Kfz-Reifen korreliert.

Auch die EP-A 447 066 beschreibt den Einsatz dieser Organosilane auf Trialkoxysilylpropylpolysulfid-Basis zur Herstellung von in hohem Maße Kieselsäuregefüllten Reifenlaufflächen. Durch die Kombination eines speziellen, silanmodifizierten Kautschuks, Kieselsäure-Füllstoff und Organosilan gelang es, den Rollwiderstand des Reifens zu verringern. Die im Text als geeignet genannten Vertreter beginnen mit Alkylgruppen; Alkyl = $-CH_2CH_2-$. Methylen-Brücken werden dagegen nicht genannt. Auch in dieser Reifenmischung zeigt sich, daß die genannten Chemikalien die Hysterese nicht nur bei höherer Temperatur senken, sondern auch, ungünstigerweise bei tiefen Temperatur.

Es wurde nun überraschenderweise gefunden, daß die erfindungsgemäßen Kautschukmischungen gemäß Anspruch 1 unerwartet günstige temperaturabhängige Hystereseeigenschaften hervorrufen. Sie sind damit den Kautschukmischungen überlegen, die Silane auf Trialkoxysilylpropylpolysulfid-Basis enthalten. Dies zeigt sich insbesondere bei neuartigen, hochgradig mit Kieselsäure gefüllten Laufflächenmischungen auf Basis von L-SBR.

Gegenstand der vorliegenden Erfindung sind daher Kautschukmischungen enthaltend einen Lösungs-SBR-Kautschuk, einen Vernetzer, einen Füllstoff, gegebenenfalls weitere Kautschukhilfsmittel sowie mindestens ein Verstärkungsadditiv der Formel

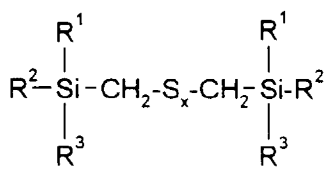

(I),

worin

| | |
|---|---|
| $R^1$, $R^2$ und $R^3$ | gleich oder verschieden sind und $C_1$-$C_{18}$-Alkyl, $C_5$-$C_{18}$-Cycloalkyl, $C_6$-$C_{18}$-Aryl, $C_1$-$C_{12}$-Alkoxy oder Phenoxy bedeuten, mit der Maßgabe, daß mindestens einer der Reste $R^1$, $R^2$ oder $R^3$ eine Alkoxy- oder Phenoxygruppe darstellt und |
| x | eine ganze Zahl von 2 bis 6 bedeutet, |

wobei das Verstärkungsadditiv in Mengen von 0,1 bis 15 Gew.-%, bezogen auf die Menge des jeweils eingesetzten Kautschuks, eingesetzt wird.

Bevorzugt enthalten die erfindungsgemäßen Kautschukmischungen 0,1 bis 10 Gew.-% Verstärkungsadditive, ganz besonders bevorzugt 1 bis 7,5 Gew.-%.

Die erfindungsgemäßen Kautschukmischungen enthalten bevorzugt solche Verstärkungsadditive der obigen Formel, in der $R^1$, $R^2$ und $R^3$ für Methyl, Ethyl, n-Propyl-, Isopropyl, n-Butyl, Amyl, Cyclohexyl, n-Octyl, 2-Ethylhexyl, n-Dodecyl, Stearyl, Phenyl, 4-Methylphenyl, 4-tert.-Butylphenyl, 4-Nonylphenyl stehen und x eine ganze Zahl von 2 bis 6 bedeutet.

Ganz besonders bevorzugt sind Verstärkungsadditive der folgenden nachstehenden Formeln

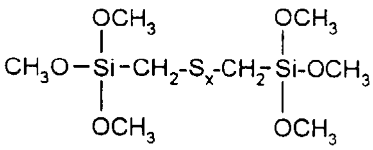

(1)

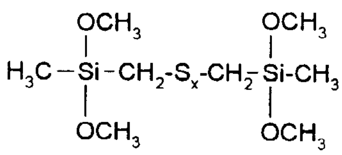

(2)

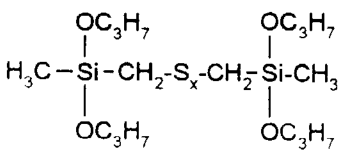

(3)

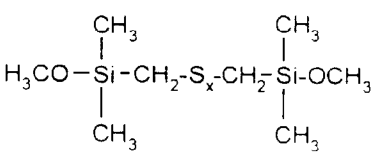

(4)

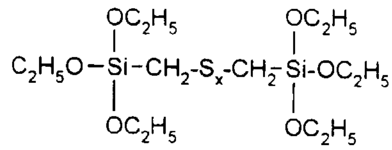

(5)

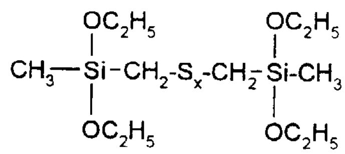

(6)

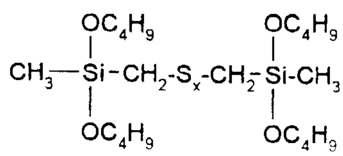

(7)

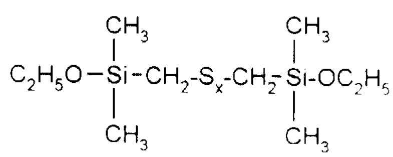

(8)

mit x = 2 bis 6.

Die erfindungsgemäßen Verstärkungsadditive können sowohl einzeln als auch im Gemisch untereinander eingesetzt werden.

Die Herstellung der erfindungsgemäßen Verstärkungsadditive kann auf verschiedene Weise erfolgen:

A: Durch Umsetzung von Mercaptogruppen-haltigen Silanen mit Schwefeldichlorid oder Dischwefeldichlorid unter Abspaltung von HCl. Die Reaktion kann in an sich bekannter Art und Weise bei Temperaturen von -30 bis +80°C, gegebenenfalls in Gegenwart von Lösungsmitteln, wie Alkoholen oder aromatischen Kohlenwasserstoffen, durchgeführt werden:

$$R^1R^2R^3Si\text{-}CH_2\text{-}SH + S_xCl_2 \rightarrow R^1R^2R^3Si\text{-}CH_2\text{-}S_{x+2}\text{-}CH_2\text{-}SiR^1R^2R^3 + HCl$$

Zur Durchführung der Reaktion verweisen wir auf Houben-Weyl, Methoden der organischen Chemie, Band 9, Seite 88 ff. (1955) und Band E 11 (1985), Thieme Verlag, Stuttgart.

B: In besonders vorteilhafter Weise gelingt die Herstellung der erfindungsgemäßen Verstärkungsadditive, wenn man Halogenalkylsilylether und Polyhalogenide mit Metallpolysulfiden in Gegenwart von alkoholischen Lösungsmitteln bei Temperaturen von -20 bis +90°C umsetzt:

$$R^1R^2R^3Si\text{-}CH_2\text{-}Hal + Me_2S_x \rightarrow R^1R^2R^3Si\text{-}CH_2S_x\text{-}CH_2\text{-}SiR^1R^2R^3 + MeHal$$

Als Metallpolysulfide werden bevorzugt solche der Formel $Me_2S_x$ eingesetzt, in der Me für Lithium, Natrium oder Kalium steht und x eine Zahl zwischen 2 und 6 bedeutet.

Als Lösungsmittel werden bevorzugt Alkohole eingesetzt, wie Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol und/oder 1,6-Hexandiol.

Die erfindungsgemäßen Verstärkungsadditive können sowohl in reiner Form als auch aufgezogen auf einen inerten organischen oder anorganischen Träger den Kautschukmischungen zugesetzt werden. Als Trägermaterialien eignen sich insbesondere Kieselsäuren, natürliche oder synthetische Silikate, Aluminiumoxid sowie Ruße.

Als Füllstoffe kommen für die erfindungsgemäßen Kautschukvulkanisate in Frage:

- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 $m^2/g$ (BET-Oberfläche) und mit Primärteilchengrößen von 100 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen.

- Synthetische Silikate, wie Aluminiumsilikat, Erdalkalisilikate wie Magnesiumsilikat oder Calciumsilikat, mit BET-Oberflächen von 20 bis 400 $m^2/g$ und Primärteilchendurchmessern von 10 bis 400 nm. Naturliche Silikate, wie Kaolin und andere natürlich vorkommende Kieselsäuren.

- Glasfasern und Glasfaserprodukte (Matten, Stränge) oder Mikrokugeln.

Bevorzugt werden hochdisperse Kieselsäuren, hergestellt durch Fällung von Lösungen von Silikaten mit BET-Oberflächen von 20 bis 400 $m^2/g$ in Mengen von 5 bis 150 Gew.-Teilen bezogen auf 100 Gew.-Teile Kautschuk, zusammen mit den erfindungsgemäßen Verstärkungsadditiven (I) eingesetzt.

Zusätzlich zu den genannten Füllstoffen können diesen noch Ruße zugesetzt werden. Die hierbei zu verwendenden Ruße sind nach dem Flammruß-, Furnace- oder Gasrußverfahren hergestellt und besitzen BET-Oberflächen von 20 bis 200 $m^2/g$, wie z.B. SAF-, ISAF-, IISAF-, HAF-, FEF- oder GPF-Ruße.

In einer besonders bevorzugten Ausführungsform des Verfahrens werden 10 bis 150 Teile helle Füllstoffe (hochdisperse Kieselsäuren), gegebenenfalls zusammen mit 0 bis 20 Gew.-Teilen Ruß, sowie 1,5 bis 10 Gew.-Teilen an erfindungsgemäßen Verstärkungsadditiven (I), jeweils bezogen auf eingesetzten Kautschuk, sowie weitere Kautschukhilfsmittel zur Herstellung der Vulkanisate eingesetzt.

Als Vernetzungsmittel werden für die erfindungsgemäßen Kautschukmischungen eingesetzt: Peroxide, Schwefel, Magnesiumoxid sowie Zinkoxid, den noch die bekannten Vulkanisationsbeschleuniger, wie Mercaptobenzthiazole, Mercaptosulfenamide, Thiocarbamate und Thiocarbonate zugesetzt werden können. Sowohl die Vulkanisationsbeschleuniger als auch die Vernetzungsmittel können einzeln oder im Gemisch untereinander eingesetzt werden. Besonders bevorzugt wird Schwefel als Vernetzungsmittel eingesetzt. Die Vernetzungsmittel und die Vulkanisationsbeschleuniger werden jeweils in Mengen von 0,1 bis 10 Gew.-%, bevorzugt 0,1 bis 5 Gew.-%, bezogen auf den jeweils eingesetzten Kautschuk, eingesetzt.

Den erfindungsgemäßen Kautschukmischungen können selbstverständlich noch weitere Kautschukhilfsprodukte zugesetzt werden, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Reaktionsverzögerer, Metalloxide sowie Aktivatoren wie Triethanolamin, Polyethylenglykol, Hexantriol, die dem Gummifachmann geläufig sind.

Die genannten Kautschukhilfsmittel werden in üblichen Mengen (0,1 bis 30 Gew.-%, bezogen auf den jeweils eingesetzten Kautschuk), eingesetzt.

Für die Herstellung der erfindungsgemäßen Kautschukmischungen wird bevorzugt Styrol/Butadien-Kautschuk mit Styrolgehalten von 1 bis 60, vorzugsweise 20 bis 50 Gew.-%, als Basispolymer (>50 Gew.-% des gesamten Kautschukgehalts der Mischung) eingesetzt und gegebenenfalls mit Naturkautschuk und/oder weiteren Synthesekautschuken verschnitten. Bevorzugte Synthesekautschuke sind beispielsweise bei W. Hofmann, Kautschuktechnologie, Gentner Verlag, Stuttgart 1980, beschrieben. Sie umfassen u.a.

Polybutadien (BR), Butadien/Acrylsäure-$C_{1-4}$-alkylester-Copolymer (ABR), Polyisopren (IR), Isobutylen/Isopren-Copolymerisate (IIR) und Ethylen/Propylen/Dien-Copolymerisate (EPDM).

Ganz besonders bevorzugt wird Lösungs-SBR mit Styrolgehalten von 10 bis 40 Gew.-% und Vinylgehalten von 25 bis 75 % sowie dessen Abmischungen mit Polybutadien und Naturkautschuk.

Die Herstellung der erfindungsgemäßen Kautschukmischungen erfolgt in üblicher Weise in bekannten Mischaggregaten, wie Walzen, Innenmischern und Mischextrudern bei Massetemperaturen von 100 bis 200°C und bei Scherraten von 1 bis 1000 $sec^{-1}$.

Die Zugabe der erfindungsgemäßen Verstärkungsadditive sowie die Zugabe der Füllstoffe erfolgt bevorzugt im ersten Teil des Mischprozesses bei Massetemperaturen von 100 bis 200°C und den erwähnten Scherraten. Sie kann jedoch auch später bei tieferen Temperaturen (40 bis 100°C) z.B. zusammen mit Schwefel und Vulkanisationsbeschleunigern erfolgen.

Die erfindungsgemäßen Kautschukmischungen können in üblicher Weise vulkanisiert werden. Die Vulkanisation wird dabei bei Temperaturen von etwa 100 bis 200°C, bevorzugt bei 130 bis 180°C, gegebenenfalls bei Drücken von

10 bis 200 bar, durchgeführt.

Die erfindungsgemäßen Kautschukvulkanisate eignen sich insbesondere zur Herstellung von Formkörpern, besonders bevorzugt zur Herstellung von Reifen.

## Beispiele

### Beispiel 1

Herstellung von $C_2H_5OSi(CH_3)_2$-$CH_2$-$S_4$-$CH_2$-$Si(CH_3)_2OC_2H_5$

43,5 g (0,25 mol) $Na_2S_4$ in 300 ml abs. Ethanol werden bei Raumtemperatur mit 76 g (0,5 mol) Chlormethyl-dimethyl-ethoxysilan versetzt und 14 h bei Raumtemperatur gerührt. Dann filtriert man von ausgefallenem NaCl ab und dampft das Filtrat im Vakuum ein. Man erhält 88 g eines dünnflüssigen gelben Öls.

$^1$H-NMR ($CDCl_3$): 0,2 bis 0,3 ppm (Multiplett), 1,2 ppm (Triplett), 2,2 bis 2,6 ppm (Multiplett), 3,6 bis 3,8 ppm (Quartett)

### Beispiel 2

Herstellung von i-$C_3H_7OSi(CH_3)_2$-$CH_2$-$S_4$-$CH_2Si(CH_3)_2OiC_3H_7$

43,5 g (0,25 mol) $Na_2S_4$ in 350 ml abs. Isopropanol werden bei 60°C mit 81,8 g (0,5 mol) Chlormethyl-dimethyl-isopropoxysilan versetzt. Man läßt 14 h bei Raumtemperatur nachrühren, filtriert von ausgefallenem Kochsalz ab und dampft den Rückstand im Vakuum ein.

| Elementaranalyse: | | | | |
|---|---|---|---|---|
| | C | H | S | Si |
| ber.: | 36,9 | 7,7 | 32,8 | 14,4 |
| gef.: | 37,0 | 7,5 | 32,5 | 14,4 |

$^1$H-NMR ($CDCl_3$): 0,2 ppm (Multiplett), 1,2 ppm (Dublett), 2,3 bis 2,6 ppm (Multiplett), 3,0 bis 3,2 ppm (Multiplett).

### Beispiel 3

Herstellung von $(C_2H_5O)_2CH_3Si$-$CH_2$-$S_4$-$CH_2$-$Si(CH_3)(OC_2H_5)_2$

59,5 g (0,25 mol) $Na_2S_6$ werden in 350 ml abs. Ethanol vorgelegt. Dann tropft man bei Raumtemperatur 91 g (0,5 mol) Chlormethyl-diethoxy-methylsilan hinzu und rührt 14 h bei Raumtemperatur nach. Man erhält 99 g eines gelben Öls.

| Elementaranalyse: | | | | |
|---|---|---|---|---|
| | C | H | S | Si |
| ber.: | 34,1 | 7,1 | 30,3 | 13,3 |
| gef.: | 34,6 | 7,2 | 29,6 | 12,9 |

$^1$H-NMR ($CDCl_3$): 0,2 ppm (Multiplett), 1,2 bis 1,3 ppm (Triplett), 2,3 bis 2,6 ppm (Multiplett), 3,7 bis 3,9 ppm (Quartett).

### Beispiel 4

Herstellung von (i-$(C_3H_7O)_2CH_3Si$-$CH_2$-$S_4$-$CH_2$-$SiCH_3$(O-i-$C_3H_7)_2$

43,5 g (0,25 mol) $Na_2S_4$ werdxen in 350 ml abs. Isopropanol vorgelegt. Dann tropft man bei Raumtemperatur 105,3 g (0,5 mol) Chlormethyl-diisopropoxy-methylsilan hinzu und rührt 14 h bei Raumtemperatur nach. Man erhält 111 g eines hellgelben dünnflüssigen Öls.

| Elementaranalyse: | | | | |
|---|---|---|---|---|
| | C | H | S | Si |
| ber.: | 40,2 | 8,0 | 26,8 | 11,7 |
| gef.: | 41,2 | 7,6 | 26,6 | 12,0 |

$^1$H-NMR ($CDCl_3$): 0,25 ppm (Multiplett), 1,2 ppm (Dublett), 2,3 bis 2,7 ppm (Multiplett), 4,1 bis 4,3 ppm (Multiplett).

**Beispiel 5**

Herstellung von $(C_2H_5O)_3Si$-$CH_2$-$S_4$-$CH_2$-$Si(OC_2H_5)_3$

43,5 g (0,25 mol) $Na_2S_4$ wurden in 275 ml abs. Ethanol vorgelegt. Dann tropfte man bei Raumtemperatur 106 g (0,5 mol) Chlormethyl-triethoxysilan hinzu und rührte 14 h bei Raumtemperatur nach. Man erhielt 118 g eines hellgelben dünnflüssigen Öls.

$^1$H-NMR ($CDCl_3$): 1,2 bis 1,3 ppm (Triplett, 18 Methylprotonen), 2,4 bis 2,7 ppm (Multiplett, 4-$CH_2$-Protonen), 3,8 bis 4,0 ppm (Quartett, 12-O-$CH_2$-Protonen).

**Beispiel 6**

Wirksamkeitsprüfung der erfindungsgemäßen Verstärkungsadditive in $SiO_2$-gefüllten Vulkanisaten:

Die folgenden Mischungen wurden im Kneter bei 150°C Innentemperatur hergestellt. Schwefel und Beschleuniger wurden auf der Walze bei 50°C nachgemischt. Zur Vulkanisation wurden die Mischungen in beheizbaren Pressen 30 Minuten lang auf 160°C erhitzt.

| Rezeptur | Vgl.1 | Vgl.2 | A | B | C | D |
|---|---|---|---|---|---|---|
| SBR-Kautschuk (VSL 1950 S 25) | 96 | 96 | 96 | 96 | 96 | 96 |
| BR-Kautschuk (Buna CB 11) | 30 | 30 | 30 | 30 | 30 | 30 |
| Kieselsäure (Vulkasil S) | 80 | 80 | 80 | 80 | 80 | 80 |
| Stearinsäure | 1 | 1 | 1 | 1 | 1 | 1 |
| Zinkoxid | 2,5 | 2,5 | 2,5 | 2,5 | 2,5 | 2,5 |
| Ruß Corax 3 | 6,5 | 6,5 | 6,5 | 6,5 | 6,5 | 6,5 |
| arom. Weichmacher (Ingralen 450) | 8 | 8 | 8 | 8 | 8 | 8 |
| oligomeres Trimethylchinolin (Vulkanox HS) | 1 | 1 | 1 | 1 | 1 | 1 |
| N-Isohexyl-N'-phenyl-p-phenylendiamin (Vulkanox 4020) | 1 | 1 | 1 | 1 | 1 | 1 |
| Ozonschutzwachs (Antilux 654) | 1,5 | 1,5 | 1,5 | 1,5 | 1,5 | 1,5 |
| Bis-triethoxysilylpropyl-tetrasulfid gem. DE-OS 2 255 577 identisch mit Silan 1 der EP-A 447 066 | 6,5 | - | - | - | - | - |
| 3-(Triethoxysilyl-propyl-dithiobenzthiazol analog Silan-2 der EP-A 447 066 | - | 6,5 | - | - | - | - |
| Verb. gemäß Bsp. 1 | - | - | 6,5 | - | - | - |
| Verb. gemäß Bsp. 2 | - | - | - | 6,5 | - | - |
| Verb. gemäß Bsp. 3 | - | - | - | - | 6,5 | - |
| Verb. gemäß Bsp. 4 | - | - | - | - | - | 6,5 |
| Auf der Walze / 50 C: Cyclohexylmercaptobenzthiazolsulfenamid | 1,5 | 1,5 | 1,5 | 1,5 | 1,5 | 1,5 |
| Diphenylguanidin | 2 | 2 | 2 | 2 | 2 | 2 |

(fortgesetzt)

| Rezeptur | Vgl.1 | Vgl.2 | A | B | C | D |
|---|---|---|---|---|---|---|
| Schwefel | 1,5 | 1,5 | 1,5 | 1,5 | 1,5 | 1,5 |
| Cyclohexylthiophthalimid | 0,1 | 0,1 | 0,1 | 0,1 | 0,1 | 0,1 |
| Mechanische Eigenschaften: Modul 100 (MPa) | 2,7 | 2,9 | 5,1 | 5,2 | 5,6 | 3,6 |
| Festigkeit (MPa) | 16,6 | 16,2 | 13,4 | 14,1 | 14,2 | 15,4 |
| Dehnbarkeit (%) | 408 | 384 | 223 | 235 | 230 | 328 |
| Härte (Shore A) | 69 | 70 | 76 | 74 | 77 | 72 |
| Elastizität (70°C) | 50 | 51 | 56 | 58 | 56 | 54 |
| Abrieb (DIN 53 516) | 123 | | 118 | 108 | 105 | 122 |
| tan delta (0°C) | 0,432 | 0,402 | 0,518 | 0,529 | 0,474 | 0,484 |
| tan delta (60°C) | 0,120 | 0,127 | 0,083 | 0,088 | 0,091 | 0,090 |

Diese Prüfungen machen deutlich, daß die erfindungsgemäßen Verbindungen wesentlich effektivere Füllstoffaktivatoren sind als die Vergleichsverbindungen. Dies wird deutlich an den erheblich gestiegenen Moduli, Härten, Elastizitäten. Insbesondere die dynamische Dämpfung bei 60°C (gemessen als Verlustfaktor tan delta), die für den Rollwiderstand eines Reifens verantwortlich ist, ist bei 60° erheblich verringert. Umso überraschender ist es, daß das die dynamische Dämpfung bei 0°C (gemessen als tal delta bei 0°C); die für die Naßrutschfestigkeit verantwortlich ist, erheblich höher ist als bei beiden Vergleichsbeispielen.

**Patentansprüche**

1. Kautschukmischungen, enthaltend einen Lösungs-SBR-Kautschuk mit Styrolgehalten von 10 bis 40 Gew.% und Vinylgehalten von 25 bis 75 Gew.% sowie dessen Abmischungen mit Polybutadien und Naturkautschuk, einen Vernetzer, einen Füllstoff gegebenenfalls weitere Kautschukhilfsmittel sowie mindestens ein Verstärkungsadditiv der Formel

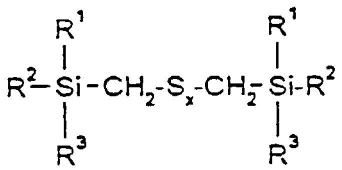

(I),

worin

| | |
|---|---|
| $R^1$, $R^2$ und $R^3$ | gleich oder verschieden sind und $C_1$-$C_{18}$-Alkyl, $C_5$-$C_{18}$-Cycloalkyl, $C_6$-$C_{18}$-Aryl, $C_1$-$C_{12}$-Alkoxy oder Phenoxy bedeuten, mit der Maßgabe, daß mindestens einer der Reste $R^1$, $R^2$ oder $R^3$ eine Alkoxy oder Phenoxygruppe darstellt und |
| x | eine ganze Zahl von 2 bis 6 bedeutet, |

wobei das Verstärkungsadditiv in Mengen von 0,1 bis 15 Gew.-%, bezogen auf die Menge des jeweils eingesetzten Kautschuks, eingesetzt wird

2. Verwendung der Kautschukmischung gemäß Anspruch 1 zur Herstellung von Kautschukvulkanisaten.

**Claims**

1. Rubber mixtures, containing a solution-SBR rubber having styrene contents of 10 to 40 wt.% and vinyl contents of 25 to 75 wt.% as well as mixtures thereof with polybutadiene and natural rubber, a vulcanising agent, a filler, optionally other rubber additives and at least one reinforcing additive corresponding to the formula

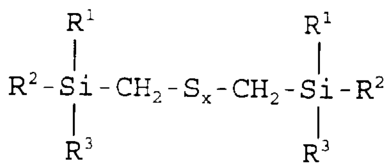

(I),

wherein

$R^1$, $R^2$ and $R^3$ are identical or different and denote $C_1$-$C_{18}$ alkyl, $C_5$-$C_{18}$ cycloalkyl, $C_6$-$C_{18}$ aryl, $C_1$-$C_{12}$ alkoxy or phenoxy, provided that at least one of the groups $R^1$, $R^2$ or $R^3$ represents an alkoxy or phenoxy group and

x denotes an integer from 2 to 6,

the reinforcing additive being used in quantities of from 0.1 to 15 wt.%, based on the quantity of rubber used in each case.

2. Use of the rubber mixture according to claim 1 for the production of vulcanised rubbers.

**Revendications**

1. Mélanges de caoutchoucs contenant un caoutchouc SBR en solution possédant des teneurs en styrène de 10 à 40% en poids et des teneurs en groupe vinylique de 25 à 75% en poids, ainsi que ses mélanges avec du polybutadiène et du caoutchouc naturel, un agent de réticulation, une matière de charge, le cas échéant d'autres adjuvants de caoutchoucs, ainsi qu'au moins un additif de renforcement répondant à la formule

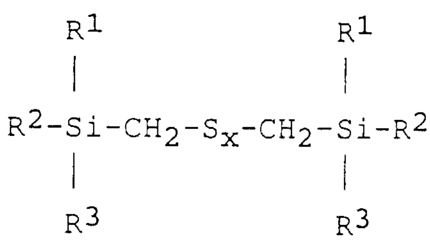

(I)

dans laquelle

$R^1$, $R^2$ et $R^3$ sont identiques ou différents et représentent un groupe alkyle en $C_1$-$C_{18}$, un groupe cycloalkyle en $C_5$-$C_{18}$, un groupe aryle en $C_6$-$C_{18}$, un groupe alcoxy en $C_1$-$C_{12}$ ou un groupe phénoxy, avec cette mesure qu'au moins un des radicaux $R^1$, $R^2$ ou $R^3$ représente un groupe alcoxy ou un groupe phénoxy, et

x représente un nombre entier de 2 à 6,

dans lesquels l'additif de renforcement est mis en oeuvre dans des quantités de 0,1 à 15% en poids rapportés à la quantité du caoutchouc respectivement mis en oeuvre.

**2.** Utilisation du mélange de caoutchoucs selon la revendication 1 pour la préparation de produits de vulcanisation de caoutchoucs.